# EUROPÄISCHE PATENTANMELDUNG

(11) **EP 0 866 396 A1**
(43) Veröffentlichungstag der Anmeldung: **23.09.1998**
(21) Anmeldenummer: 98102307.0
(22) Anmeldetag: 11.02.1998
(51) Int. Cl.: G05D 23/19

(54) **Vorrichtung zur Anzeige eines Sollwerts**

(30) Priorität: 17.03.1997 DE 19710771
(71) Anmelder: ROBERT BOSCH GMBH, 70442 Stuttgart (DE)
(72) Erfinder: Lochmahr, Gunnar, 71229 Leonberg (DE)

(57) **Zusammenfassung**

Es wird eine Vorrichtung zur Anzeige eines Sollwerts vorgeschlagen. Bestimmten Zeitpunkten (t1, t2 ... tn) sind Sollwerte (S1, S2 ... Sn) zuordenbar. Der Betrag des Sollwerts (S1, S2 ... Sn) entlang einer Zeitachse (16) ist in Abhängigkeit vom zugeordneten Zeitpunkt (t1, t2 ... tn) dargestellt.

## Beschreibung

### Stand der Technik

Die Erfindung geht aus von einer Vorrichtung zur Anzeige eines Sollwerts. Bekannt ist bereits ein Digitalschaltfeld TAC der Firma Junkers, Bosch Thermotechnik, Firmenschrift JU Ps 2-816, April 1996, mit dem ein Heizungssystem geregelt und überwacht wird. In dem zugehörigen Display ist die Zeit von 0 bis 24 Uhr als Strecke dargestellt. Die Zeitschaltuhr läßt sich in Intervallen von einer Viertelstunde programmieren. Diejenige Intervalle, während denen die Heizanlage im Normalbetrieb laufen soll, sind im Display mit einem dunklem Balken ausgefüllt. Die restlichen Intervalle bleiben hellgeschaltet. Diese einfache Balkendarstellung ist ausreichend für Ein- und Ausschaltvorgänge.

### Vorteile der Erfindung

Die erfindungsgemäße Vorrichtung zur Anzeige eines Sollwerts ordnet bestimmten Zeitpunkten Sollwerte zu. Sie zeichnet sich dadurch aus, daß der Betrag des Sollwerts entlang einer Zeitachse in Abhängigkeit von den Zeitpunkten dargestellt ist. Dem Benutzer wird der qualitative Sollwertverlauf in Abhängigkeit von der Zeit vor Augen geführt. Anhand der Anzeige können leicht Sollwertkorrekturen vorgenommen werden. Dank der zeitabhängigen Darstellung spiegelt der Sollwertverlauf tageszeitabhängiges Benutzerverhalten wider. Die Anzeige erschließt sich unterschiedliche Anwendungsgebiete. Solltemperaturen des Brauchwassers zu vorgegebenen Zeiten werden dargestellt. Voreingestellte Absenkpositionen von Rolläden zu bestimmten Zeiten lassen sich ebenso anzeigen wie Temperatur-Zeit-Programme bei Koch- oder Backgeräten.

Eine zweckmäßige Weiterbildung sieht die Darstellung des Betrages als Höhe eines vertikalen Balkens vor. Die Balkenhöhe ist ein Maß für den Sollwert. Der in der Nähe der Zeitachse liegende Fußpunkt des Balkens weist dem jeweiligen Sollwert den entsprechenden Zeitpunkt zu. Dadurch erhöht sich die Übersichtlichkeit der Anzeige.

In einer Ausgestalltung ist der Betrag als punktförmiges Segment dargestellt. Die unterschiedliche Distanz zur Zeitachse ist ein Maß für den Sollwert. Dadurch verbleibt in der Anzeige genügend Raum für weitergehende Informationen.

In einer weitergehenden Ausführungsform ist eine entlang der Zeitachse über eine Zeitauswahl verschiebbare Eingabemarke vorgesehen, deren Position den ausgewählten Zeitpunkt mit zugehörigem Sollwert festlegt, wobei dieser Sollwert über einen Sollwertgeber veränderbar ist. Zeitabhängige Sollwertkorrekturen werden grafisch unterstützt. Korrigierte Werte lassen sich anhand der Anzeige rasch überprüfen. Die Sollwerteingabe bedarf keiner ausführlichen Erläuterung.

In einer zweckmäßigen Weiterbildung zeigt den über die Eingabemarke ausgewählten Zeitpunkt ein Zeitdisplay an. Der Benutzer nimmt unter Verwendung des mit einer hohen Genauigkeit ausgestatteten Zeitdisplays eine Feineinstellung vor. Entlang der Zeitachse sind aus Gründen der Übersichtlichkeit nur einige wenige Zeitpunkte aufgetragen.

Eine Ausgestaltung zeichnet sich dadurch aus, daß den Sollwert, der dem Zeitpunkt zugeordnet ist, ein Sollwertdisplay anzeigt. Wiederum tragen unterschiedliche Anzeigengenauigkeiten dazu bei, sowohl den Kriterien Übersichtlichkeit als auch Genauigkeit Rechnung zu tragen.

Eine zweckmäßige Weiterbildung sieht eine Zuordnung des ausgewählten Zeitpunkts zu dem Sollwert bei einer Betätigung der Zeitauswahl vor. Dadurch kann auf eine separate Quittierungs- oder Zuordnungstaste verzichtet werden. Dank dieser automatischen Zuordnung erleichtert sich die Bedienung.

Weitere vorteilhafte Ausgestaltungen ergeben sich aus der Beschreibung.

### Zeichnung

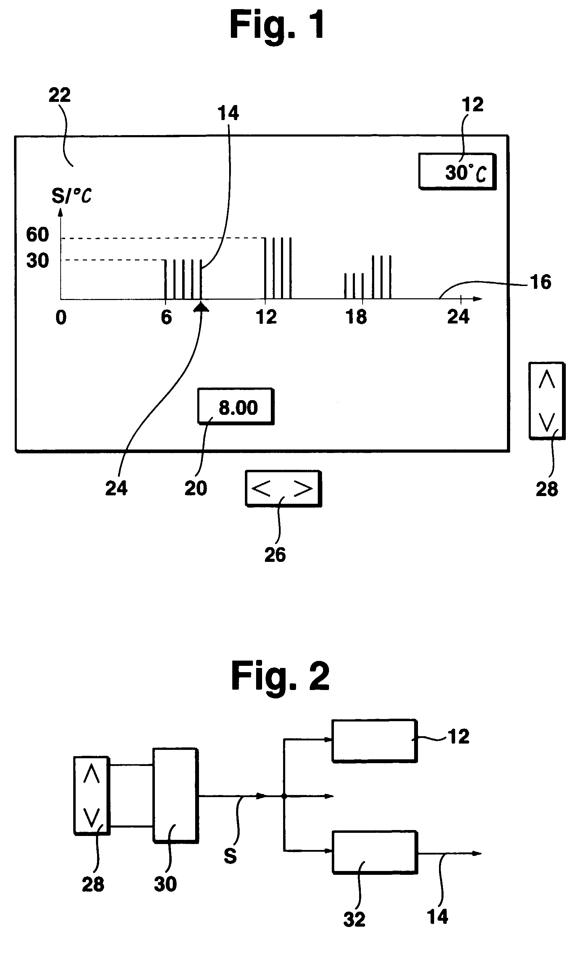

Es zeigen Figur 1 einen möglichen Aufbau einer Anzeige und Figur 2 ein Blockschaltbild einer Sollwertvorgabe.

Entlang einer Zeitachse 16 ist die Uhrzeit aufgetragen. Der Betrag eines Balkens 14 stellt in Abhängigkeit von jeweiligen Zeitpunkten t1, t2 ... tn zugehörige Sollwerte S1, S2 ... Sn, beispielsweise eine Temperatur, dar. Eine Eingabemarke 24 wählt den aktuell gültigen Zeitpunkt t1 mit zugehörigem Sollwert S1 aus. Der Zeitpunkt t1 ist im Zeitdisplay 20, der Sollwert S1 im Sollwertdisplay 12 alphanumerisch dargestellt. Die beschriebenen Komponenten bilden eine Anzeige 22. Zur Veränderung der Position der Eingabemarke 24 ist eine Zeitauswahl 26 vorgesehen. Der ausgewählte Sollwert S1 läßt sich mit Hilfe eines Sollwertgebers 28 verstellen.

Die Signale des Sollwertgebers 28 sind einem Zähler 30 zugeführt, der in Abhängigkeit von der Ansteuerung den Sollwert S bereitstellt. Der Sollwert S wird dem Sollwertdisplay 12 und einer Signalverarbeitung 32 zugeführt, die den Betrag des Balkens 14 generiert.

Die Anzeige 22 gibt dem Benutzer einen Überblick über den zeitlichen Verlauf des Sollwerts S. Der Betrag des Balkens 14 ist ein Maß für den Sollwert S. Den Zeitpunkten t1, t2 ... tn sind die jeweiligen Sollwerte S1, S2 ... Sn zugeordnet. Beispielhaft wird im weiteren von einer Brauchwassersolltemperatur als Sollwert S ausgegangen. Der zugehörige Verlauf ist tageszeitabhängig dargestellt. Das von unmittelbar aufeinanderfolgenden Zeitpunkten t1, t2 gebildete Zeitintervall liegt beispielsweise im Halb- oder Viertelstundenbereich. Bei beliebig kleinen Zeitintervallen ergibt sich ein kontinuierlicher Kurvenverlauf des Sollwerts S. Wird ein Zeitintervall durch einen ersten Zeitpunkt t1 und einen zweiten Zeitpunkt t2 gebildet, so ist für die Dauer dieses Intervalls ein erster Sollwert S1 gültig, der zum zweiten Zeitpunkt t2 von einem zweiten Sollwert S2 abgelöst wird.

Statt eines durchgehenden Balkens 14 kann auch ein den Endpunkt markierendes Segment den Betrag des Sollwerts S anzeigen.

Die Signalverarbeitung 32 nimmt eine Zuordnung des Sollwerts S zu dem Betrag des Balkens 14 vor. Sie muß nicht unbedingt linear ausgeführt sein. Eine Offsetreduzierung engt den Wertebereich dahingehend ein, daß nur Sollwerte S, die innerhalb eines zu erwartenden Bereichs liegen, angezeigt werden. Abhängig von der Art des Sollwerts S kann sich, gegebenenfalls zusätzlich, eine logarithmische Darstellung empfehlen. Als Anzeige 22 kommen beispielsweise ein Flüssigkristalldisplay oder Computerbildschirm zum Einsatz.

Nachfolgend ist die Korrektur eines Sollwerts S beschrieben. Bei Betätigung der Zeitauswahl 26 wird die Eingabemarke 24 um ein Zeitintervall verschoben. Dieser Zeitpunkt t1 ist damit aktiviert und alphanumerisch im Zeitdisplay 20 angezeigt. Der zu diesem Zeitpunkt t1 gehörige Sollwert S1 wird aus dem Speicher ausgelesen und als Ausgangsbasis inkremental verändert. Bei Betätigung des Sollwertgebers 28 verändert der Zähler 30 aufwärts- oder abwärtszählend den Sollwert S1. Die Signalverarbeitung 32 setzt den sich verändernden Sollwert S1 in den entsprechenden Betrag des Balkens 14 um und steuert die Anzeige 22 entsprechend an. Die Feineinstellung läßt sich mit Hilfe des sich ständig aktualisierenden Sollwertdisplays 12 vornehmen. Die Zuordnung zwischen dem ausgewählten Zeitpunkt t1 und dem aktualisierten Sollwert S1 wird vorgenommen, indem die Eingabemarke 24 erneut durch die Zeitauswahl 26 verschoben wird. Das aktualisierte Wertepaar wird in einem Speicher hinterlegt. Die Zeitauswahl 26 könnte bei einem touch screen über Berührung der Anzeige 22 oder mit Hilfe eines Lichtgriffels erfolgen.

Alternativ lassen sich die Zeitpunkte t1, t2 ... tn durch eine separate Schaltuhr einstellen. Die Zuordnung der Wertepaare wird über ein separates Bedienelement oder automatisch mit dem Wechsel in einen anderen Parametriermodus vorgenommen.

Eine Steuerung, in der die zeitabhängigen Sollwerte S hinterlegt sind, erkennt die aktuelle Uhrzeit. Wird der erste Zeitpunkt t1 erreicht, generiert sie den voreingestellten Sollwert S1, solange bis dieser zum zweiten Zeitpunkt t2 durch den zweiten Sollwert S2 abgelöst wird. Zu diesem Zweck wird zeitabhängig der aktuelle Sollwert S aus dem mittels der Uhrzeit adressierten Speicher ausgelesen und gegebenfalls in einen analogen oder digitalen Sollwert umgesetzt. Die aktuellen, zeitabhängigen Sollwerte S werden im Fall der Anwendung für eine Brauchwassertemperatursteuerung über eine analoge Signalleitung oder ein Bussystem an ein Steuergerät der Heizanlage übermittelt. Das Steuergerät übernimmt die Brauchwassertemperaturregelung.

Weitere Anwendungsfelder erschließt sich die Anzeige 22 beispielsweise in der Darstellung von Absenkpositionen bei Rolläden zu vorgegebenen Zeiten, tageszeitabhängigen Raumtemperaturen oder Temperatur-Zeit-Programmen bei Küchengeräten.

## Patentansprüche

1. Vorrichtung zur Anzeige eines Sollwerts, wobei bestimmten Zeitpunkten (t1, t2 ... tn) Sollwerte (S1, S2 ... Sn) zuordenbar sind und der Betrag des Sollwerts (S1, S2 ... Sn) entlang einer Zeitachse (16) in Abhängigkeit von dem zugeordneten Zeitpunkt (t1, t2 ... tn) dargestellt ist.

2. Vorrichtung nach Anspruch 1, dadurch gekennzeichnet, daß der Betrag durch die Hohe eines vertikalen Balkens (14) dargestellt ist.

3. Vorrichtung nach Anspruch 1, dadurch gekennzeichnet, daß der Betrag durch ein punktförmiges Segment dargestellt ist, das einen den Betrag widergebenden Abstand von der Zeitachse (16) aufweist.

4. Vorrichtung nach einem der vorhergehenden Ansprüche, dadurch gekennzeichnet, daß eine entlang der Zeitachse (16) über eine Zeitauswahl (26) verschiebbare Eingabemarke (24) vorgesehen ist, deren Position den ausgewählten Zeitpunkt (t1, t2 ... tn) mit zugehörigem Sollwert (S1, S2 ... Sn) festlegt, wobei dieser Sollwert (S1, S2 ... Sn) über einen Sollwertgeber (28) veränderbar ist.

5. Vorrichtung nach Anspruch 4, dadurch gekennzeichnet, daß den über die Eingabemarke (24) ausgewählten Zeitpunkt (t1, t2 ... tn) ein Zeitdisplay (20) anzeigt.

6. Vorrichtung nach einem der vorhergehenden Ansprüche, dadurch gekennzeichnet, daß den Sollwert (S1, S2 ... Sn), der dem Zeitpunkt (t1, t2 ... tn) zugeordnet ist, ein Sollwertdisplay (12) anzeigt.

7. Vorrichtung nach einem der vorhergehenden Ansprüche 4 bis 6, dadurch gekennzeichnet, daß eine Zuordnung des ausgewählten Zeitpunkts (t1, t2 ... tn) zu dem vorgegebenen Sollwert (S1, S2 ... Sn) bei einer Betätigung der Zeitauswahl (26) vorgesehen ist.
